# EUROPEAN PATENT SPECIFICATION

(11) **EP 3 159 786 B1**
(45) Date of publication and mention of the grant of the patent: **08.04.2020**
(21) Application number: 14895245.0
(22) Date of filing: 15.08.2014
(51) Int. Cl.: G06F 3/0488, G06F 3/041, G06K 9/00

(54) **MOBILE TERMINAL INTERFACE ADJUSTMENT METHOD AND APPARATUS, AND TERMINAL**
EINSTELLVERFAHREN UND -VORRICHTUNG FÜR SCHNITTSTELLE EINES MOBILEN ENDGERÄTS SOWIE ENDGERÄT
PROCÉDÉ D'ADAPTATION D'INTERFACE DE TERMINAL MOBILE ET UN APPAREIL, ET UN TERMINAL

(30) Priority: 18.06.2014 CN 201410272362
(43) Date of publication of application: 26.04.2017
(73) Proprietor: ZTE Corporation, Shenzhen, Guangdong 518057 (CN)
(72) Inventor: ZHAO, Dongxiao, Shenzhen Guangdong 518057 (CN); WANG, Ling, Shenzhen Guangdong 518057 (CN)
(74) Representative: Savi, Massimiliano
(86) International application number: PCT/CN2014/084558
(87) International publication number: WO 2015/192456

(56) References cited:
- EP-A1- 2 629 181
- CN-A- 102 375 652
- CN-A- 102 592 113
- CN-A- 102 929 554
- CN-A- 103 019 554
- KR-A- 20090 120 599
- KR-A- 20100 024 589
- KR-A- 20130 137 969
- US-A1- 2010 212 974
- US-A1- 2013 215 060

## Description

### Technical Field

The present invention relates to the technical field of mobile terminals, and more particularly to method and apparatus, and a terminal for adjusting a mobile terminal interface.

### Background

The iphone creates brand new operation and control modes such as multipoint touch and gravity sensing. These innovations greatly improve the user experience and lay a solid foundation for success of the iphone. These technologies also become objects competitively imitated by other mobile phone manufacturers. The user experience is one of the most important and most foundational factors regarding whether a mobile phone product can be appreciated by a user. How to design a mobile phone from the perspective of the user becomes the problem that should be most considered during design of the mobile phone.

Based on data statistics, about 10% of global population is left-handed people. More than half of successive presidents of the United States of America are left-handed. Those non-left-handed people probably have the habits of writing or calling using left hands in life. So, it is necessary to take demands of these people into consideration during product design. There are a great number of examples in existing science and technology products. The use habit of a mouse in a windows system includes left and right hand use habits. Moreover, most of mouse products are of a symmetric design commonly used for left-and-right-handed people, and a minority of products is independently designed for the left-handed people. As for use of mobile phones in daily life, particularly, mobile phones with a touch screen, the commonest operation is the thumb operation, the activity of thumb is within a certain activity range, the situation of difficulty in operation frequently occurs, and the operation experience of a user is greatly affected. The operation experience of the left-handed people on this mobile phone product will be more terrible.

A great number of these designs exist in existing mobile phone products. That is, a delete key of a dialing interface is located at the left side, a short message sending key is located at the right side, and mobile phones with a large-screen are popular currently. It is difficult for a left-handed person to touch the right side of the screen to execute an operation.

The problems in the existing technology are that it cannot be dynamically determined whether a user operates a mobile terminal using a left hand or a right hand and an interface of the mobile terminal cannot be correspondingly and dynamically adjusted to meet operation demands of the user.

US 2013/0215060 A1 discloses in a mobile terminal apparatus that can be operated with a touch panel, a picture is displayed on the touch panel in a manner suitable for a way of holding to improve the operability of the touch panel. Touch sensors fixed on the top side, the bottom side, the left side, and the right side of the mobile terminal apparatus detect a touch state of a hand that grips the mobile terminal apparatus. Thus, a way of holding determination unit determines a way of holding the mobile terminal apparatus based on the number of touch regions for which the touch sensors detect the touch state and the areas of the touch regions. Moreover, a display picture generation unit generates a display picture that corresponds to the way of holding determined by the way of holding determination unit, and displays the display picture on a display unit of the touch panel.

### Summary of the Invention

The embodiment of the present invention provides a method and an apparatus, and a terminal for adjusting a mobile terminal interface according to appended independent claims, which are intended to at least solve the problem regarding whether a user adjusts an interface of a mobile terminal using a left hand or a right hand to meet operation demands of the user. Further improvements and embodiments are provided in the dependent claims.

Also provided is a method for adjusting an interface of a mobile terminal, which may include that:
grip information of a user over a mobile terminal is detected;
an effective region, gripped by the user, of the mobile terminal is determined according to the grip information;
result information regarding whether the user operates the mobile terminal using a left hand or a right hand is judged according to the effective region; and
an interface of the mobile terminal is adjusted according to the result information.

Alternatively, the step that touch information of the user over the mobile terminal is detected includes that:
touch sensing information of the user for the mobile terminal is received through a sensor, and the touch sensing information is converted into the grip information.

Alternatively, the step that an effective region, gripped by the user, of the mobile terminal is determined according to the grip information includes that:
the grip information specifically refers to an electric signal, and the electric signal is quantized into a binaryzation signal; and
the effective region, gripped by the user, of the mobile terminal is determined according to the binaryzation signal.

Alternatively, the step that the effective region, touched by the user, of the mobile terminal is determined according to the binaryzation signal includes that:
the binaryzation signal is filtered; and
the filtered binaryzation signal is processed to obtain an effective region, touched by the user, on two sides of a housing of the mobile terminal.

Alternatively, the step that the filtered binaryzation signal is processed includes that:
the binaryzation signal is converted into a binaryzation image, and a binaryzation image region consisting of successive effective points is marked as a region to be identified, the effective points are black pixel points in the binaryzation image; and
a vertical middle line of the region to be identified is taken as a first reference line, in case that a number of successive effective points in a vertical direction of the first reference line exceeds a first set threshold, a horizontal middle line of a segment where the successive effective points in the vertical direction are located is taken as a second reference line, and when a number of successive effective points in a horizontal direction of the second reference line exceeds a second set threshold, the region to be identified is taken as the effective region, touched by the user, on the two sides of the housing of the mobile terminal.

Alternatively, the step that the filtered binaryzation signal is processed further includes that:
the binaryzation signal is converted into a binaryzation image, and a binaryzation image region consisting of successive effective points is marked as a region to be identified, the effective points are black pixel points in the binaryzation image; and
an area value of the region to be identified is calculated, and the region to be identified of which the area value exceeds a third set threshold is taken as the effective region, touched by the user, on the two sides of the housing of the mobile terminal.

Alternatively, the step that the result information regarding whether the user operates the mobile terminal using a left hand or a right hand is judged according to the effective region includes that:
a length value of the effective region is calculated to obtain an effective region with a maximum length value; and
the result information regarding whether the user operates the mobile terminal using the left hand or the right hand is obtained according to a position of the effective region with the maximum length value located on the housing of the mobile terminal.

Alternatively, the step that the interface of the mobile terminal is adjusted according to the result information includes that:
when the result information reflects that the user operates the mobile terminal using the left hand, the interface of the mobile terminal is adjusted to a layout suitable for a left hand operation; and
when the result information reflects that the user operates the mobile terminal using the right hand, the interface of the mobile terminal is adjusted to a layout suitable for a right hand operation.

Also provided is an apparatus for adjusting a interface of a mobile terminal, which includes:
a detection module, arranged to detect grip information of a user over a mobile terminal;
a processing module, arranged to determine an effective region, gripped by the user, of the mobile terminal according to the grip information;
a judgment module, arranged to judge result information regarding whether the user operates the mobile terminal using a left hand or a right hand according to the effective region; and
an interface adjustment module, arranged to adjust an interface of the mobile terminal according to the result information.

Alternatively, the detection module is arranged to receive touch sensing information of the user over the mobile terminal through a sensor, and convert the touch sensing information into the grip information.

Alternatively, the processing module includes:
a signal quantization unit, arranged to quantize the grip information into a binaryzation signal;
a filter unit, arranged to filter the binaryzation signal; and
a signal processing unit, arranged to process the filtered binaryzation signal to obtain an effective region, touched by the user, on two sides of a housing of the mobile terminal.

Also provided is a mobile terminal, which includes:
a sensor, arranged to detect grip information of a user over the mobile terminal; and
a processor, arranged to determine an effective region, gripped by the user, of the mobile terminal according to the grip information, judge result information regarding whether the user operates the mobile terminal using a left hand or a right hand according to the effective region; and adjust an interface of the mobile terminal according to the result information.

By means of the above technical solution, the present invention at least has the following advantages.

According to the method and apparatus for adjusting the interface of the mobile terminal, and the terminal provided by the present invention, by means of dynamic acquisition of information regarding whether the user operates the mobile terminal using the left hand or the right hand, the interface of the mobile terminal is correspondingly and dynamically adjusted to meet operation demands of the user, thus improving the user experience. The invention will arried out according to the attached independent claims.

### Brief Description of Drawings

FIG. 1 is a flowchart of a method for adjusting a interface of a mobile terminal according to a first embodiment of the present invention;
FIG. 2 is a schematic diagram of a binaryzation image according to the first embodiment of the present invention;
FIG. 3 is a schematic diagram of a binaryzation signal according to the first embodiment of the present invention;
FIG. 4 is a flowchart showing processing of the binaryzation signal according to the first embodiment of the present invention;
FIG. 5 is a schematic diagram of an apparatus for adjusting a interface of a mobile terminal according to a second embodiment of the present invention;
FIG. 6 is a schematic diagram of a processing module 20 according to the second embodiment of the present invention; and
FIG. 7 is a schematic diagram of a mobile terminal according to a third embodiment of the present invention.

### Specific Embodiments

In order to further elaborate the technical means and effects adopted in the present invention to achieve predetermined purposes, the present invention will be described in detail below in combination with accompany drawings and alternative embodiments.

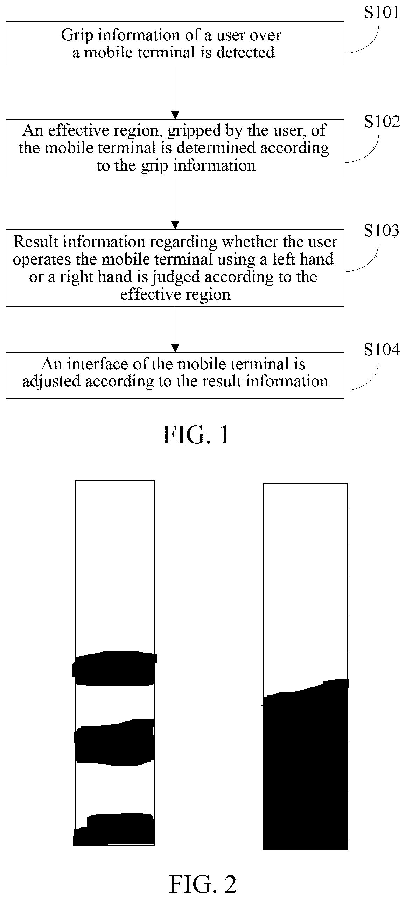

According to a first embodiment of the present invention, as shown in FIG. 1, a method for adjusting an interface of an mobile terminal includes the following specific steps.

In step S101: Grip information of a user over a mobile terminal is detected.

Specifically, touch sensing information of the user over the mobile terminal is received through a sensor, and the touch sensing information is converted into the grip information, herein the grip information specifically refers to an electric signal, and the electric signal is quantized into a binaryzation signal.

Further, sensors are mounted at two sides of the mobile terminal of the present invention, herein the types of the sensors are not limited to: a capacitive sensor, a pressure sensor and an infrared sensor. The above sensors or other sensors may be adopted according to actual requirements.

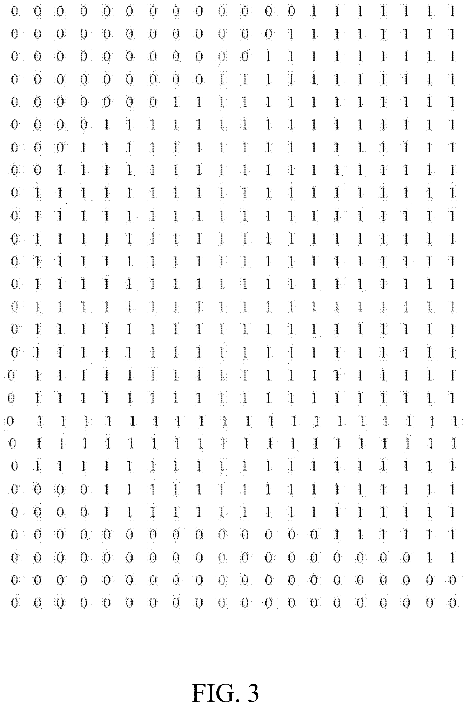

When the user operates the mobile terminal using a single hand, the sensors mounted at the two sides of the mobile terminal receive touch sensing information of the hand over the sensors, and the touch sensing information is converted into an electric signal. Herein, the electric signal includes a voltage signal or a current signal or the like. By means of a preset threshold, the electric signal is converted into a binaryzation signal represented by 0 and 1. That is, a signal generated by the user over a contact region of a terminal device is represented by 1, and a noncontact region is represented by 0. The binaryzation signal received and converted by each sensor is shown in a form of an image and expressed as a binaryzation image namely a black-and-white image. The black parts are represented by 1, referring to effective contact points of the user over the mobile terminal. The white parts are represented by 0, and the effective region, touched by the user, of the mobile terminal is converted into a binaryzation image, herein the binaryzation image is a binaryzation signal consisting of two-dimensional arrays, as shown in FIG. 3.

In step S102: an effective region, gripped by the user, of the mobile terminal is determined according to the grip information, herein the grip information specifically refers to an electric signal, the electric signal is quantized into a binaryzation signal, and the effective region, gripped by the user, of the mobile terminal is determined according to the binaryzation signal.

Specifically, the binaryzation signal is filtered firstly. Filtering of the binaryzation signal is intended to perform noise reduction on the binaryzation signal so as to prevent detection errors of the sensor over a minority of points. That is, the situation of inversion of 0 and 1 is prevented in the two-dimensional arrays, the mobile terminal performs noise reduction on an image array firstly, and from the perspective of an image, white points in a black region are eliminated.

For a noise detection mode, the following two modes may be adopted.

The first mode is that: in a vertical direction, successive MU and MD black points exist at both ends of N successive white points respectively, and it is determined that the points are noisy points; from the perspective of an array, the array has N adjacent elements of which the values are 0, MU and MD elements of which the values are 1 exist at both ends of the N elements, it is determined that the elements are noisy points, and the values of the elements are changed into 1; arrays al[M][N] and ar[M][N] in sensing effective regions at the left and right sides of the mobile terminal are obtained, herein N is smaller than a certain threshold, both MU and MD shall be greater than a certain threshold, and the threshold may be specifically set according to actual requirements.

The second mode is that: the area of black regions in the binaryzation image is detected, and the black regions in the binaryzation image are marked; and a threshold S1 is set, the area of the black regions in the binaryzation image is compared with S1 in sequence, and the black region of which the area is not greater than S1 is marked as noise, and converted into a white region.

The present invention may also perform noise reduction on the binaryzation signal using other modes, and the present invention is not limited thereto.

Secondly, the filtered binaryzation signal is processed to obtain an effective region, touched by the user, on two sides of a housing of the mobile terminal.

Specifically, the effective region, touched by the user, on the two sides of the housing of the mobile terminal may be acquired using the following two modes.

The first mode is that: the binaryzation signal is converted into a binaryzation image, and a binaryzation image region consisting of successive effective points is marked as a region to be identified, the effective points are black pixel points in the binaryzation image; and a vertical middle line of the region to be identified is taken as a first reference line, in case that the number of successive effective points in a vertical direction of the first reference line exceeds a first set threshold, a horizontal middle line of a segment where the successive effective points in the vertical direction are located is taken as a second reference line, and when the number of successive effective points in a horizontal direction of the second reference line exceeds a second set threshold, the region to be identified is taken as the effective region, touched by the user, on the two sides of the housing of the mobile terminal.

Specifically, by means of judgment on successive 1, judgment on the number of successive 1 of array data is arranged to detect the lengths of effective regions, touched by the skin of the user, at two sides of the mobile terminal. From the perspective of an image, an effective contact region is determined by judgment based on cross-shaped black pixel points. That is, a middle line of the image is taken as a vertical line, the vertical line is searched for successive black pixel points, when the number of the successive black pixel points is greater than a certain threshold, transverse black point judgment is performed on the segment of region, a middle position between the successive black points of this segment is taken, the number of successive black pixel points at the left and right sides of the middle position is judged, if the number is greater than a certain threshold, that is, a black cross exists with reference to this central point, it is judged that the region is an effective contact region, and the length of the effective contact region is recorded. Effective contact regions at two sides of a mobile terminal are obtained by means of such method respectively.

Further, the binaryzation signal consists of two-dimensional arrays, and it is judged whether al[M/2][i] and ar[M/2][i] in the array are 1, respectively, herein i progressively increases from 0, and i is smaller than N. The number of successive black pixel points of which the values are 1 in the arrays is recorded, 1 serves as black pixel points in the binaryzation image, 0 serves as white pixel points in the binaryzation image, and the black pixel points serve as effective points in the binaryzation image. When the number of the successive black pixel points of which the values are 1 is greater than a certain threshold, middle elements of the black pixel points in the array are subjected to transverse successive-1 judgment, and suppose the middle elements of the successive black pixel points of which the values are 1 in the array are al[M/2][R], al[j][R] is calculated respectively, herein j progressively increases from 0, and j is smaller than M. When the number of the successive black pixel points of which the values in the array are 1 is greater than a certain threshold, this region is regarded as an effective region, touched by the user, of the mobile terminal, the number of effective regions at the left and right sides of the mobile terminal satisfying the above conditions are stored in arrays tl[5] and tr[5] respectively, and the number of the effective contact regions at two sides of the mobile terminal is recorded respectively, herein al[M][N] and ar[M][N] represent arrays in the effective regions at the left and right sides of the mobile terminal respectively. tl[5] and tr[5] represent the number of the effective regions, touched by the user, on the left and right sides of the mobile terminal respectively.

The second mode is that: the area of black regions in the binaryzation image is detected, and the black regions in the binaryzation image are marked, herein regions consisting of effective points namely black pixel points are the black regions. A threshold S2 is set, the area of the black regions in the binaryzation image is compared with S2 in sequence, the black region of which the area is greater than S2 is marked as the effective region, touched by the user, of the mobile terminal, and the number of the effective regions at the two sides of the mobile terminal and information such as area and length corresponding to each effective region are recorded respectively.

In step S103: Result information regarding whether the user operates the mobile terminal using a left hand or a right hand is judged according to the effective region.

Specifically, after the effective regions at the two sides of the mobile terminal are acquired, according to the effective regions at the two sides of the mobile terminal, it is judged whether the user operates the mobile terminal using the left hand or the right hand, herein when the user operates the mobile terminal using a single hand, it may be judged, by means of multiple methods, whether the user operates the mobile terminal using the left hand or the right hand. The positions of fingers of the user and the lengths of the effective regions are judged respectively below to obtain the result information regarding whether the user operates the mobile terminal using the left hand or the right hand.

When the positions of a thumb and other four fingers are judged, the positions are judged by means of various features in the process of using mobile terminals by people, and one of the methods is adopted herein. As shown in FIG. 2, when the user uses the mobile terminal, the thumb and the other four fingers are located at two sides of the mobile terminal respectively. As for the thumb, due to contact of a palm, the effective contact surface is a longer region, and if the thumb is put at the side, the effective contact region is a longer contact region and a shorter contact region. As for the other four fingers, the effective contact regions are several separated shorter contact regions or noncontact regions, the number of the effective contact regions ranges from 0 to 4. If the number of the effective contact regions at a certain side is greater than 2, it is judged that that side is the direction of the four fingers and the other side is the thumb side. If the number of the effective contact regions at the two sides of the mobile terminal is smaller than or equal to 2, the longest effective contact regions at the two sides are compared respectively, and the longer effective contact region is the thumb side. Specifically, the operation is executed according to the size of the mobile terminal. The size of an existing mobile terminal product such as a smart phone is increasing. If the size of the mobile terminal is larger, the other four fingers other than the thumb cannot be in contact with the other side of the mobile terminal during single-hand operation of the user, or only some of the fingers can be in contact with the other side of the mobile terminal. The operation may be executed according to user groups oriented by the mobile terminal, e.g., female or male. It may also be directly judged, according to an effective length of the mobile terminal touched by the user, whether the user operates the mobile terminal using the left hand or the right hand. The method for judging whether the user operates the mobile terminal using the left hand or the right hand according to the effective region, of the present invention is not limited thereto.

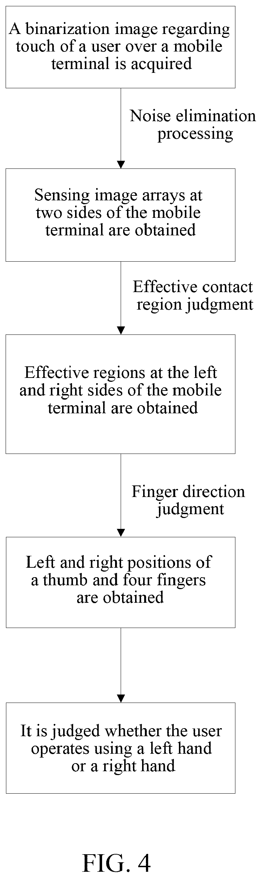

By means of processing of the above binaryzation signal, whether the user operates the mobile terminal using the left hand or the right hand may also obtained according to FIG. 4.

In step S104: An interface of the mobile terminal is adjusted according to the result information.

Specifically, after the result information regarding whether the user operates the mobile terminal using the left hand or the right hand is obtained, the interface of the mobile terminal is adjusted to suit an occasion regarding whether the user operates the mobile terminal using the left hand or the right hand.

When it is determined, according to the above step, that the user operates the mobile terminal only using the left hand, the interface of the mobile terminal is automatically adjusted to a position facilitating left hand operation. For example, operation touch keys such as a delete key and an option key of the mobile terminal are adjusted to the left side of the mobile terminal so as to meet demands of the user for operating the mobile terminal using the left hand to the greatest extent, thus improving the user experience. When the user switches the left hand to the right hand to operate the mobile terminal, the mobile terminal dynamically receives touch information of the user over the mobile terminal, result information regarding that the user operates the mobile terminal using the right hand is obtained through calculation, and the interface of the mobile terminal is automatically adjusted according to the result information to meet convenient demands of the user for operating the mobile terminal using the right hand, thus improving the user experience.

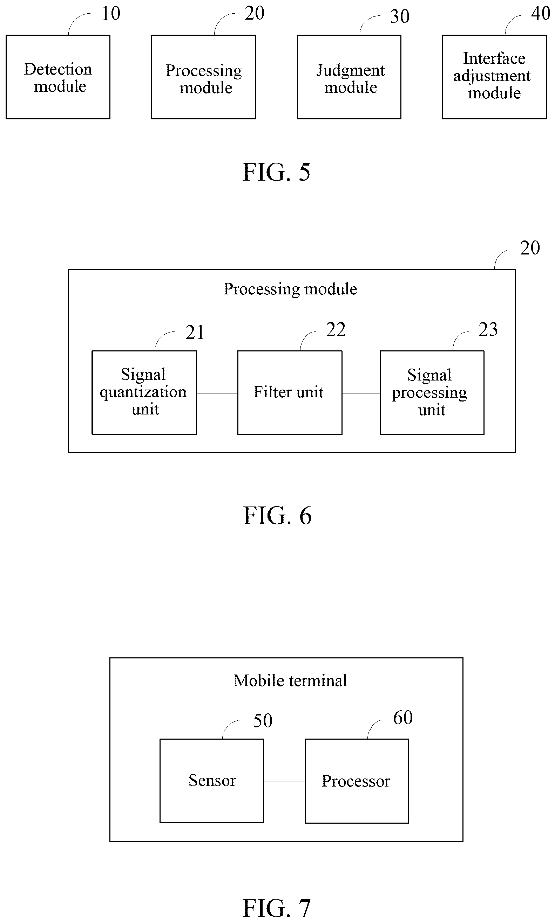

According to a second embodiment of the present invention, as shown in FIG. 5, a mobile terminal interface adjustment apparatus includes:
a detection module 10, arranged to detect grip information of a user over a mobile terminal.

Specifically, the detection module 10 detects touch sensing information of the user over the mobile terminal and converts the touch sensing information into the grip information, herein the grip information specifically referring to an electric signal.

When the user operates the mobile terminal using a single hand, the detection module 10 converts the touch sensing information into the electric signal, herein the electric signal includes a voltage signal or a current signal or the like.

A processing module 20, arranged to determine an effective region, gripped by the user, of the mobile terminal according to the grip information.

Specifically, as shown in FIG. 6, the processing module 20 includes:
a signal quantization unit 21, arranged to quantize the grip information into a binaryzation signal, herein the grip information specifically refers to the electric signal, and the signal quantization module 21 quantizes the electric signal into a binaryzation signal;
a filter unit 22, arranged to filter the binaryzation signal in order to achieve the aim of noise reduction of the binaryzation signal; and
a signal processing unit 23, arranged to process the filtered binaryzation signal to obtain an effective region, touched by the user, on two side surfaces of a housing of the mobile terminal.

Herein, by means of a preset threshold, the signal quantization unit 21 converts the electric signal into a binaryzation signal represented by 0 and 1. That is, a signal generated by the user over a contact region of a terminal device is represented by 1, and a noncontact region is represented by 0. The binaryzation signal received and converted by the sensor is shown in a form of an image and expressed as a binaryzation image namely a black-and-white image. The black parts are represented by 1, referring to effective contact points of the user over the mobile terminal. The white parts are represented by 0, and the effective region, touched by the user, of the mobile terminal is converted into a binaryzation image, herein the binaryzation image is a binaryzation signal consisting of two-dimensional arrays, as shown in FIG. 3.

Further, the processing module 20 filters the binaryzation signal firstly. Filtering of the binaryzation signal via the processing module 20 is intended to perform noise reduction on the binaryzation signal so as to prevent detection errors of the sensor over a minority of points. That is, the situation of inversion of 0 and 1 is prevented in the two-dimensional arrays, the mobile terminal performs noise reduction on an image array firstly, and from the perspective of an image, white points in a black region are eliminated.

For a noise detection mode, the following two modes may be adopted.

The first mode is that: in a vertical direction, successive MU and MD black points exist at both ends of N successive white points respectively, and it is determined that the points are noisy points; from the perspective of an array, the array has N adjacent elements of which the values are 0, MU and MD elements of which the values are 1 exist at both ends of the N elements, it is determined that the elements are noisy points, and the values of the elements are changed into 1; arrays al[M][N] and ar[M][N] in sensing effective regions at the left and right sides of the mobile terminal are obtained, herein N is smaller than a certain threshold, both MU and MD shall be greater than a certain threshold, and the threshold may be specifically set according to actual requirements.

The second mode is that: the area of black regions in the binaryzation image is detected, and the black regions in the binaryzation image are marked; and a threshold S1 is set, the area of the black regions in the binaryzation image is compared with S1 in sequence, and the black region of which the area is not greater than S1 is marked as noise, and converted into a white region.

The filter unit 22 of the present invention may also perform noise reduction on the binaryzation signal using other methods, and the present invention is not limited thereto.

Secondly, the filtered binaryzation signal is processed to obtain an effective region, touched by the user, on two side surfaces of a housing of the mobile terminal.

Specifically, the effective region, touched by the user, on the two sides of the housing of the mobile terminal may be acquired using the following two modes.

The first mode is that: the binaryzation signal is converted into a binaryzation image, and a binaryzation image region consisting of successive effective points is marked as a region to be identified, the effective points are black pixel points in the binaryzation image; and a vertical middle line of the region to be identified is taken as a first reference line, in case that the number of successive effective points in a vertical direction of the first reference line exceeds a first set threshold, a horizontal middle line of a segment where the successive effective points in the vertical direction are located is taken as a second reference line, and when the number of successive effective points in a horizontal direction of the second reference line exceeds a second set threshold, the region to be identified is taken as the effective region, touched by the user, on the two sides of the housing of the mobile terminal.

Specifically, by means of judgment on successive 1, judgment on the quantity of successive 1 of array data is arranged to detect the lengths of effective regions, touched by the skin of the user, at two sides of the mobile terminal. From the perspective of an image, an effective contact region is determined by judgment based on cross-shaped black pixel points. That is, a middle line of the image is taken as a vertical line, the vertical line is searched for successive black pixel points, when the number of the successive black pixel points is greater than a certain threshold, transverse black point judgment is performed on that segment of region, a middle position between the successive black points of that segment is taken, the number of successive black pixel points at the left and right sides of the middle position is judged, if that number is greater than a certain threshold, that is, a black cross exists with reference to the central point, it is judged that the region is an effective contact region, and the length of the effective contact region is recorded. Effective contact regions at two sides of a mobile terminal are obtained by means of such method respectively.

Further, the binaryzation signal consists of two-dimensional arrays, and it is judged whether al[M/2][i] and ar[M/2][i] in the array are 1, respectively, herein i progressively increases from 0, and i is smaller than N. The number of successive black pixel points of which the values are 1 in the arrays is recorded, 1 serves as black pixel points in the binaryzation image, 0 serves as white pixel points in the binaryzation image, and the black pixel points serve as effective points in the binaryzation image. When the number of the successive black pixel points of which the values are 1 is greater than a certain threshold, middle elements of the black pixel points in the array are subjected to transverse successive-1 judgment, and suppose the middle elements of the successive black pixel points of which the values are 1 in the array are al[M/2][R], al[j][R] is calculated respectively, herein j progressively increases from 0, and j is smaller than M. When the quantity of the successive black pixel points of which the values in the array are 1 is greater than a certain threshold, this region is regarded as an effective region, touched by the user, of the mobile terminal, the number of effective regions at the left and right sides of the mobile terminal satisfying the above conditions are stored in arrays tl[5] and tr[5] respectively, and the number of the effective contact regions at two sides of the mobile terminal is recorded respectively, herein al[M][N] and ar[M][N] represent arrays in the effective regions at the left and right sides of the mobile terminal respectively. tl[5] and tr[5] represent the quantity of the effective regions, touched by the user, on the left and right sides of the mobile terminal respectively.

The second mode is that: the area of black regions in the binaryzation image is detected, and the black regions in the binaryzation image are marked, herein regions consisting of effective points namely black pixel points are the black regions. A threshold S2 is set, the area of the black regions in the binaryzation image is compared with S2 in sequence, the black region of which the area is greater than S2 is marked as the effective region, touched by the user, of the mobile terminal, and the quantity of the effective regions at the two sides of the mobile terminal and information such as area and length corresponding to each effective region are recorded respectively.

A judgment module 30 is arranged to judge, result information regarding whether the user operates the mobile terminal using the left hand or the right hand according to the effective region.

Specifically, after the effective regions at the two sides of the mobile terminal are acquired, according to the effective regions at the two sides of the mobile terminal, the judgment module 30 judges whether the user operates the mobile terminal using the left hand or the right hand, herein when the user operates the mobile terminal using a single hand, it may be judged, by means of multiple methods, whether the user operates the mobile terminal using the left hand or the right hand. The positions of fingers of the user and the lengths of the effective regions are judged respectively below to obtain the result information regarding whether the user operates the mobile terminal using the left hand or the right hand.

When the positions of a thumb and other four fingers are judged, the positions are judged by means of various features in the process of using mobile terminals by people, and one of the methods is adopted herein. As shown in FIG. 2, when the user uses the mobile terminal, the thumb and the other four fingers are located at two sides of the mobile terminal respectively. As for the thumb, due to contact of a palm, the effective contact surface is a longer region, and if the thumb is also put at the side, the effective contact region is a longer contact region and a shorter contact region. As for the other four fingers, the effective contact regions are several separated shorter contact regions or noncontact regions, the number of the effective contact regions ranges from 0 to 4. If the number of the effective contact regions at a certain side is greater than 2, it is judged that this side is the direction of the four fingers and the other side is the thumb side. If the number of the effective contact regions at the two sides of the mobile terminal is smaller than or equal to 2 respectively, the longest effective contact regions at the two sides are compared respectively, and the longer effective contact region is the thumb side. Specifically, the operation is executed according to the size of the mobile terminal. The size of an existing mobile terminal product such as a smart phone is increasing. If the size of the mobile terminal is larger, the other four fingers other than the thumb cannot be in contact with the other side of the mobile terminal during single-hand operation of the user, or only some of the fingers can be in contact with the other side of the mobile terminal. The operation may be executed according to user groups oriented by the mobile terminal, e.g., female or male. It may also be directly judged, according to an effective length of the mobile terminal touched by the user, whether the user operates the mobile terminal using the left hand or the right hand. The method for judging, according to the effective region, whether the user operates the mobile terminal using the left hand or the right hand, of the present invention is not limited thereto.

An interface adjustment module 40 is arranged to adjust an interface of the mobile terminal according to the result information.

Specifically, after the result information regarding whether the user operates the mobile terminal using the left hand or the right hand is obtained, the interface adjustment module 40 adjusts the interface of the mobile terminal to suit an occasion regarding whether the user operates the mobile terminal using the left hand or the right hand.

According to a third embodiment of the present invention, as shown in FIG. 7, a mobile terminal includes:
A sensor 50, arranged to detect grip information of a user over the mobile terminal.

Specifically, the sensor 50 detects touch sensing information of the user over the mobile terminal and converts the touch sensing information into the grip information, herein the grip information specifically referring to an electric signal, and the electric signal are quantized into a binaryzation signal.

Further, the sensors 50 are mounted at two sides of the mobile terminal, herein the types of the sensors are not limited to: a capacitive sensor, a pressure sensor and an infrared sensor, and the above sensors or other sensors may be adopted according to actual requirements.

A processor 60, arranged to determine an effective region, gripped by the user, of the mobile terminal according to the grip information, judge result information regarding whether the user operates the mobile terminal using a left hand or a right hand according to the effective region, and adjust an interface of the mobile terminal according to the result information.

Specifically, the processor 60 receives the touch sensing information of the user over the mobile terminal through the sensor 50, and converts the touch sensing information into the grip information, herein the grip information specifically refers to the electric signal, and the electric signal is quantized into a binaryzation signal; the effective region, gripped by the user, of the mobile terminal is determined according to the binaryzation signal; length values of the effective regions on two side surfaces of a housing of the mobile terminal are calculated respectively to obtain an effective region with the maximum length value; and the result information regarding whether the user operates the mobile terminal using the left hand or the right hand is obtained according to the position of the effective region with the maximum length value located on the housing of the mobile terminal. When the result information reflects that the user operates the mobile terminal using the left hand, the interface of the mobile terminal is adjusted to a layout suitable for a left hand operation; and when the result information reflects that the user operates the mobile terminal using the right hand, the interface of the mobile terminal is adjusted to a layout suitable for a right hand operation.

According to the method and apparatus for adjusting the interface of the mobile terminal, and the terminal provided by the embodiment of the present invention, by means of dynamic acquisition of information regarding whether the user operates the mobile terminal using the left hand or the right hand, the interface of the mobile terminal is correspondingly and dynamically adjusted to meet operation demands of the user, thus improving the user experience.

## Claims

1. A method for adjusting an interface of a terminal, comprising:
detecting grip information of a user over a mobile terminal;
determining an effective region, gripped by the user, of the mobile terminal according to the grip information;
judging result information regarding whether the user operates the mobile terminal using a left hand or a right hand according to the effective region; and
adjusting an interface of the mobile terminal according to the result information,
wherein determining an effective region, gripped by the user, of the mobile terminal according to the grip information comprises:
the grip information specifically referring to an electric signal, quantizing the electric signal into a binaryzation signal; and
determining the effective region, gripped by the user, of the mobile terminal according to the binaryzation signal,
wherein determining the effective region, touched by the user, of the mobile terminal according to the binaryzation signal comprises:
filtering the binaryzation signal; and
processing the filtered binaryzation signal to obtain an effective region, touched by the user, on two sides of a housing of the mobile terminal,
processing the filtered binaryzation signal comprises:
converting the binaryzation signal into a binaryzation image, and marking a binaryzation image region consisting of successive effective points as a region to be identified, wherein the effective points are black pixel points in the binaryzation image; and
taking a vertical middle line of the region to be identified as a first reference line, in case that a number of successive effective points in a vertical direction of the first reference line exceeds a first set threshold, taking a horizontal middle line of a segment where the successive effective points in the vertical direction are located as a second reference line, and when a number of successive effective points in a horizontal direction of the second reference line exceeds a second set threshold, taking the region to be identified as the effective region, touched by the user, on the two sides of the housing of the mobile terminal,
or,
processing the filtered binaryzation signal comprises:
converting the binaryzation signal into a binaryzation image, and marking a binaryzation image region consisting of successive effective points as a region to be identified, wherein the effective points are black pixel points in the binaryzation image; and
calculating an area value of the region to be identified, and taking the d region to be identified of which the area value exceeds a third set threshold as the effective region, touched by the user, on the two sides of the housing of the mobile terminal,
wherein judging the result information regarding whether the user operates the mobile terminal using the left hand or the right hand according to the effective region comprises:
calculating a length value of the effective region, obtaining an effective region with a maximum length value; and
obtaining the result information regarding whether the user operates the mobile terminal using the left hand or the right hand according to the position of the effective region with the maximum length value on the housing of the mobile terminal,
wherein adjusting the interface of the mobile terminal according to the result information comprises:
when the result information reflects that the user operates the mobile terminal using the left hand, adjusting the interface of the mobile terminal to a layout suitable for a left hand operation; and
when the result information reflects that the user operates the mobile terminal using the right hand, adjusting the interface of the mobile terminal to a layout suitable for a right hand operation.

2. The method for adjusting an interface of a terminal according to claim 1, wherein detecting touch information of the user over the mobile terminal comprises:
receiving touch sensing information of the user over the mobile terminal through a sensor, and converting the touch sensing information into the grip information.

3. Apparatus comprising means for performing each of the steps of the method of claim 1.

4. The apparatus for adjusting an interface of a terminal according to claim 3, wherein said apparatus further comprising means adapted to carry out each of the steps of the method of claim 2.

## Patentansprüche

1. Verfahren zum Einstellen einer Schnittstelle eines Endgeräts, das umfasst:
Erkennen von Griffinformationen eines Benutzers über einem mobilen Endgerät;
Bestimmen einer tatsächlichen Region des mobilen Endgeräts, die von dem Benutzer ergriffen wird, gemäß den Griffinformationen;
Beurteilen von Ergebnisinformationen, die betreffen, ob der Benutzer das mobile Endgerät unter Verwendung einer linken Hand oder einer rechten Hand betätigt, gemäß der tatsächlichen Region; und
Einstellen einer Schnittstelle des mobilen Endgeräts gemäß den Ergebnisinformationen,
wobei das Bestimmen einer tatsächlichen Region des mobilen Endgeräts, die von dem Benutzer ergriffen wird, gemäß den Griffinformationen umfasst:
da die Griffinformationen sich spezifisch auf ein elektrisches Signal beziehen, Quantisieren des elektrischen Signals in ein Binarisierungssignal; und
Bestimmen der tatsächlichen Region des mobilen Endgeräts, die von dem Benutzer ergriffen wird, gemäß dem Binarisierungssignal,
wobei das Bestimmen der tatsächlichen Region des mobilen Endgeräts, die von dem Benutzer berührt wird, gemäß dem Binarisierungssignal umfasst:
Filtern des Binarisierungssignals; und
Verarbeiten des gefilterten Binarisierungssignals zum Erhalten einer tatsächlichen von dem Benutzer berührten Region auf zwei Seiten eines Gehäuses des mobilen Endgeräts,
wobei das Verarbeiten des gefilterten Binarisierungssignals umfasst:
Umwandeln des Binarisierungssignals in ein Binarisierungsbild und Markieren einer Binarisierungsbildregion, die aus aufeinanderfolgenden tatsächlichen Punkten besteht, als eine zu identifizierende Region, wobei die tatsächlichen Punkte schwarze Pixelpunkte in dem Binarisierungsbild sind; und
Nehmen einer vertikalen Mittellinie der zu identifizierenden Region als eine erste Bezugslinie in einem Fall, in dem eine Anzahl von aufeinanderfolgenden tatsächlichen Punkten in einer vertikalen Richtung der ersten Bezugslinie einen ersten eingestellten Schwellenwert überschreitet, Nehmen einer horizontalen Mittellinie eines Segments, wo die aufeinanderfolgenden
tatsächlichen Punkte in der vertikalen Richtung sich befinden, als eine zweite Bezugslinie, und, wenn eine Anzahl von aufeinanderfolgenden tatsächlichen Punkten in einer horizontalen Richtung der zweiten Bezugslinie einen zweiten eingestellten Schwellenwert überschreitet, Nehmen der zu identifizierenden Region als die tatsächliche Region, die von dem Benutzer berührt wird, auf den zwei Seiten des Gehäuses des mobilen Endgeräts,
oder
wobei das Verarbeiten des gefilterten Binarisierungssignals umfasst:
Umwandeln des Binarisierungssignals in ein Binarisierungsbild und Markieren einer Binarisierungsbildregion, die aus aufeinanderfolgenden tatsächlichen Punkten besteht, als eine zu identifizierende Region, wobei die tatsächlichen Punkte schwarze Pixelpunkte in dem Binarisierungsbild sind; und
Berechnen eines Bereichswerts der zu identifizierenden Region und Nehmen der zu identifizierenden Region d, deren Bereichswert einen dritten Schwellenwert überschreitet, als die tatsächliche Region, die von dem Benutzer berührt wird, auf den zwei Seiten des Gehäuses des mobilen Endgeräts,
wobei das Beurteilen der Ergebnisinformationen, die betreffen, ob der Benutzer das mobile Endgerät unter Verwendung der linken Hand oder der rechten Hand betätigt, gemäß der tatsächlichen Region umfasst:
Berechnen eines Längenwerts der tatsächlichen Region, Erhalten einer tatsächlichen Region mit einem maximalen Längenwert; und
Erhalten der Ergebnisinformationen, die betreffen, ob der Benutzer das mobile Endgerät unter Verwendung der linken Hand oder der rechten Hand betätigt, gemäß der Position der tatsächlichen Region mit dem maximalen Längenwert auf dem Gehäuse des mobilen Endgeräts,
wobei das Einstellen der Schnittstelle des mobilen Endgeräts gemäß den Ergebnisinformationen umfasst:
wenn die Ergebnisinformationen widerspiegeln, dass der Benutzer das mobile Endgerät unter Verwendung der linken Hand betätigt, Einstellen der Schnittstelle des mobilen Endgeräts auf ein Layout, das sich für die Betätigung mit der linken Hand eignet; und
wenn die Ergebnisinformationen widerspiegeln, dass der Benutzer das mobile Endgerät unter Verwendung der rechten Hand betätigt, Einstellen der Schnittstelle des mobilen Endgeräts auf ein Layout, das sich für die Betätigung mit der rechten Hand eignet.

2. Verfahren zum Einstellen einer Schnittstelle eines Endgeräts nach Anspruch 1, wobei
das Erkennen von Berührungsinformationen des Benutzers über dem mobilen Endgerät umfasst:
Empfangen von Berührungserfassungsinformationen des Benutzers über dem mobilen Endgerät durch einen Sensor und Umwandeln der Berührungserfassungsinformationen in die Griffinformationen.

3. Vorrichtung, die Mittel zum Durchführen von jedem der Schritte des Verfahrens nach Anspruch 1 umfasst.

4. Vorrichtung zum Einstellen einer Schnittstelle eines Endgeräts nach Anspruch 3,
wobei die Vorrichtung ferner Mittel umfasst, die geeignet sind, um jeden der Schritte des Verfahrens nach Anspruch 2 durchzuführen.

## Revendications

1. Procédé d'adaptation d'une interface d'un terminal, comprenant :
la détection d'informations de prise d'un utilisateur sur un terminal mobile ;
la détermination d'une région effective, saisie par l'utilisateur, du terminal mobile en fonction des informations de prise ;
le jugement d'informations de résultat sur le fait que l'utilisateur emploie le terminal mobile en utilisant une main gauche ou une main droite en fonction de la région effective ; et
l'adaptation d'une interface du terminal mobile en fonction des informations de résultat,
dans lequel la détermination d'une région effective, saisie par l'utilisateur, du terminal mobile en fonction des informations de prise comprend :
les informations de prise se référant spécifiquement à un signal électrique, la quantification du signal électrique en un signal de binarisation ; et
la détermination de la région effective, saisie par l'utilisateur, du terminal mobile en fonction du signal de binarisation,
dans lequel la détermination de la région effective, touchée par l'utilisateur, du terminal mobile en fonction du signal de binarisation comprend :
le filtrage du signal de binarisation ; et
le traitement du signal de binarisation filtré pour obtenir une région effective, touchée par l'utilisateur, sur deux côtés d'un boîtier du terminal mobile,
le traitement du signal de binarisation filtré comprend :
la conversion du signal de binarisation en une image de binarisation et le marquage d'une région d'image de binarisation composée de points effectifs successifs comme une région à identifier, dans lequel les points effectifs sont des points de pixels noirs dans l'image de binarisation ; et
en prenant une ligne médiane verticale de la région à identifier comme une première ligne de référence, dans le cas où un nombre de points effectifs successifs dans une direction verticale de la première ligne de référence dépasse un premier seuil établi, en prenant une ligne médiane horizontale d'un segment où sont situés les points effectifs successifs dans la direction verticale comme une seconde ligne de référence, et quand un nombre de points effectifs successifs dans une direction horizontale de la seconde ligne de référence dépasse un second seuil établi, en prenant la région à identifier comme la région effective, touchée par l'utilisateur, sur les deux côtés du boîtier du terminal mobile,
ou
le traitement du signal de binarisation filtré comprend :
la conversion du signal de binarisation en une image de binarisation et le marquage d'une région d'image de binarisation composée de points effectifs successifs comme une région à identifier, dans lequel les points effectifs sont des points de pixels noirs dans l'image de binarisation ; et
le calcul d'une valeur de surface de la région à identifier et la prise de la région d à identifier dont la valeur de surface dépasse un troisième seuil établi comme la région effective, touchée par l'utilisateur, sur les deux côtés du boîtier du terminal mobile,
dans lequel le jugement d'informations de résultat sur le fait que l'utilisateur emploie le terminal mobile en utilisant la main gauche ou la main droite en fonction de la région effective comprend :
le calcul d'une valeur de longueur de la région effective, l'obtention d'une région effective avec une valeur de longueur maximale ; et
l'obtention des informations de résultat sur le fait que l'utilisateur emploie le terminal mobile en utilisant la main gauche ou la main droite en fonction de la position de la région effective avec la valeur de longueur maximale sur le boîtier du terminal mobile,
dans lequel l'adaptation de l'interface du terminal mobile en fonction des informations de résultat comprend :
quand les informations de résultat reflètent que l'utilisateur emploie le terminal mobile en utilisant la main gauche, l'adaptation de l'interface du terminal mobile à une disposition appropriée pour un actionnement avec la main gauche ; et
quand les informations de résultat reflètent que l'utilisateur emploie le terminal mobile en utilisant la main droite, l'adaptation de l'interface du terminal mobile à une disposition appropriée pour un actionnement avec la main droite.

2. Procédé d'adaptation d'une interface d'un terminal selon la revendication 1, dans lequel
la détection d'informations de toucher de l'utilisateur sur le terminal mobile comprend :
la réception d'informations de détection de toucher de l'utilisateur sur le terminal mobile par le biais d'un capteur et la conversion des informations de détection de toucher en informations de prise.

3. Appareil comprenant des moyens pour effectuer chacune des étapes du procédé selon la revendication 1.

4. Appareil d'adaptation d'une interface d'un terminal selon la revendication 3,
dans lequel ledit appareil comprend en outre des moyens adaptés pour exécuter chacune des étapes du procédé selon la revendication 2.
